# FASCICULE DE BREVET EUROPEEN

(11) **EP 0 625 404 B1**
(45) Date de publication et mention de la délivrance du brevet: **01.08.2001**
(21) Numéro de dépôt: 94107693.7
(22) Date de dépôt: 16.05.1994
(51) Int. Cl.: B23P 11/00, B60S 1/08, H01H 11/06, B29C 65/56

(54) **Procédé de fabrication d'une roue dentée pour dispositif de commande d'essuie-glace, et roue dentée ainsi réalisée**
Verfahren zur Herstellung eines Zahnrades für eine Scheibenwischersteuervorrichtung, und so hergestelltes Zahnrad
Method of manufacturing a gear wheel for a control device for a windscreen wiper, and gear wheel thus obtained

(30) Priorité: 21.05.1993 FR 9306118
(43) Date de publication de la demande: 23.11.1994
(73) Titulaire: VALEO SYSTEMES D'ESSUYAGE, 78180 Montigny-Le-Bretonneux (FR)
(72) Inventeur: Renoux, Pascal, F-86100 Chattelerault (FR)
(74) Mandataire: Kohn, Philippe

(56) Documents cités:
- EP-A- 0 533 052
- WO-A-88/03356
- DE-A- 3 109 500
- DE-A- 3 730 900
- DE-A- 3 818 563
- FR-A- 2 367 952

## Description

La présente invention concerne un procédé de fabrication d'une roue dentée, notamment pour dispositif de commande d'essuie-glace, du type présentant sur l'une de ses faces frontales une piste conductrice, consistant à prévoir dans la surface frontale une empreinte d'une forme complémentaire à la forme de la piste conductrice, à fixer la piste conductrice dans ladite empreinte et à solidariser la piste avec la face frontale de la roue dentée.

On connaît, de l'état de la technique selon le brevet français FR2142627, une roue dentée comportant une piste conductrice fixée sur la face frontale par l'intermédiaire de pattes obtenues par découpage et cambrage dans le disque. Ces pattes traversent le revêtement de la face frontale au niveau de fentes et sont rabattues dans le fond d'évidements ménagés dans la face arrière du revêtement. Ce mode de réalisation nécessite plusieurs opérations d'usinage et d'assemblage qui se répercutent sur le prix de fabrication.

Il est connu du document DE 38 18 563 (voir préambule de la revendication 1) une roue dentée à piste conductrice fixée par des plots et des saillies concentriques réalisées au cours de l'opération de moulage de la roue dentée, et du document DE 31 09 500 un procédé de déformation à chaud d'un matériau thermoplastique pour des saillies en forme de plots.

L'objet de la présente invention est de remédier à ces inconvénients en proposant un procédé de fabrication moins onéreux.

A cet effet, l'invention concerne en particulier un procédé dans lequel on prévoit en outre sur la face frontale une bordure longeant le bord périphérique de l'empreinte et faisant saillie en bordure de ladite empreinte en venant de la face frontale, et dans lequel on déforme ladite bordure saillante, lorsque la piste conductrice est disposée dans l'empreinte, en exerçant sur ladite bordure périphérique en saillie une contrainte sensiblement radiale dirigée vers la piste conductrice jusqu'à ce qu'elle recouvre le bord de ladite piste conductrice, caractérisé en ce que la face frontale de la roue dentée est constituée par un matériau thermoplastique, et en ce que l'on procède à la déformation de la bordure périphérique à l'aide d'une matrice à chaud exerçant une pression sur la bordure périphérique.

De préférence, le poinçon à chaud présente une gorge dont la largeur correspond sensiblement à la largeur de la bordure périphérique, les bords latéraux de la gorge étant inclinés vers la direction de la piste conductrice.

La bordure est située au voisinage de la périphérie extérieure de la piste conductrice.

La bordure est située au voisinage de la périphérie interne de la piste conductrice.

Avantageusement, le désaffleurement de piste conductrice par rapport à la surface de la roue est comprise entre 0,20 millimètres et -0,05 millimètres.

De préférence, la face frontale présente une couronne axiale formant saillie, la piste conductrice présentant un orifice de section complémentaire.

Selon une variante préférée, la couronne axiale présente un ergot de positionnement faisant saillie, la piste conductrice présentant une découpe complémentaire.

L'invention sera mieux comprise à la lecture de la description qui suit, faisant référence aux figures où :
- la figure 1 représente une vue de face de la roue dentée ;
- la figure 2 représente une vue selon une coupe OA, avant l'écrasement de la bordure périphérique, et de la matrice ;
- la figure 3 représente une vue selon une coupe OB après l'écrasement de la bordure périphérique.

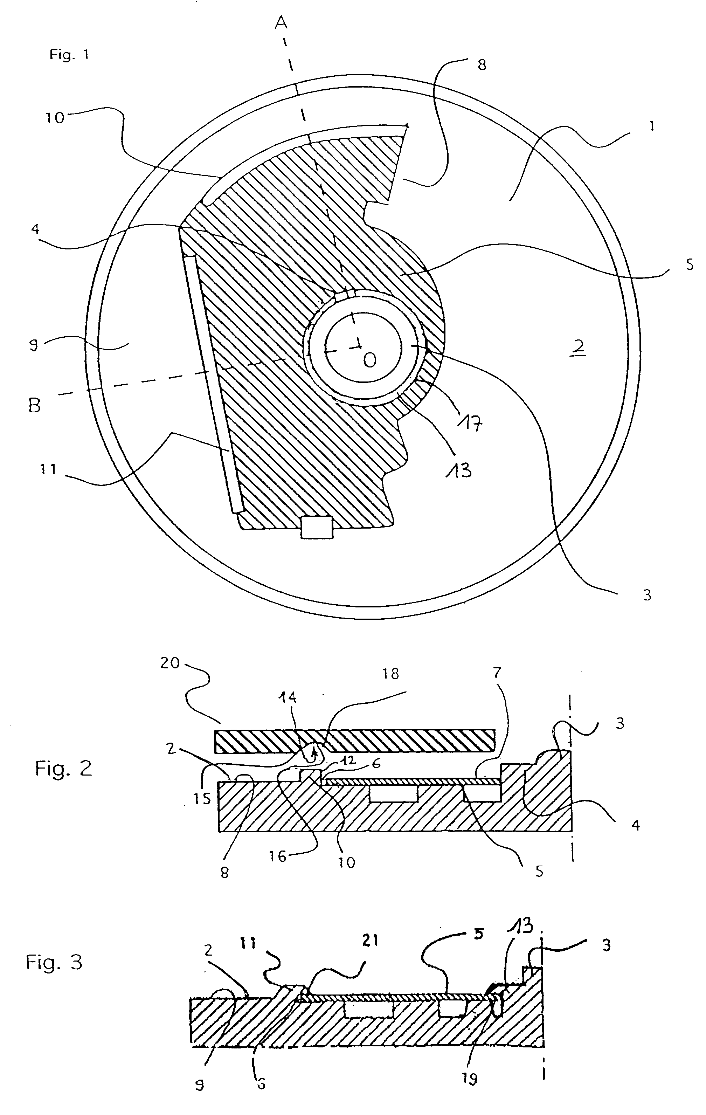

La figure 1 représente une vue de face de la roue dentée selon l'invention réalisée par injection de matière plastique. Elle présente une couronne 3 axiale faisant saillie par rapport à la surface frontale 2. Cette couronne axiale 3 présente un ergot 4 qui s'étend radialement en faisant également saillie par rapport à la surface frontale 2.

Une piste conductrice 5 est fixée sur la face frontale. La forme de la piste conductrice est constituée par des secteurs annulaires dont la longueur angulaire est déterminée par les informations qui seront délivrés par un ensemble de balais (non représentés) en contact électrique avec ladite piste conductrice.

La piste conductrice est réalisée par découpage d'une feuille métallique. Un trou central est prévu pour permettre le passage de la couronne axiale 3 et de l'ergot 4. L'asymétrie du trou central assure le positionnement angulaire de la piste sur la surface frontale, l'ergot 4 assurant une fonction de détrompage.

La face frontale présente une empreinte 6 de forme complémentaire à la piste conductrice 5. Cette empreinte, représentée en coupe sur les figures 2 et 3, présente une profondeur déterminée de façon à ce que la piste conductrice 5, lorsqu'elle est en position, soit affleurante avec la surface de la face frontale 2, c'est-à-dire que le plan de la surface 7 soit sensiblement coplanaire avec le plan des surfaces 8, 9 des parties de la face frontale dans le prolongement de la piste conductrice 5. La distance entre ces deux plans est comprise entre -0,05 et + 0,20 millimètres.

La face frontale présente, en périphérie de la piste conductrice, des bordures 10, 11 faisant saillie par rapport à la surface de la face frontale. La section selon un plan de coupe contenant l'axe de la roue dentée, de ces segments de bordure 10, 11, avant assemblage de la piste conductrice, est sensiblement rectangulaire, comme représenté sur la figure 2. Le bord latéral 12 de la bordure le plus proche de la piste conductrice est sensiblement perpendiculaire à la surface supérieure 8 de la face frontale, de façon à permettre la mise en place de la piste conductrice.

Lorsque la piste conductrice 5 est positionnée dans l'empreinte 6, les bordures 10,11 sont déformées à l'aide d'une matrice à chaud 20 présentant une gorge 14 propre à épouser les formes des bordures 10, 11. La figure 2 représente une vue en coupe d'une telle matrice 20.

La gorge est délimitée par un premier flanc extérieur 15 incliné et un flanc opposé 18 incliné en direction opposée, les deux flancs venant se rejoindre sur un fond 16 en formant ainsi un profil sensiblement trapézoïdal. La section de la gorge 14 correspond à un trapèze dont la surface est sensiblement égale à la surface de la section correspondante de la bordure 10, et dont :
- la dimension de la grande base est supérieure à la largeur de la bordure 10,
- la dimension de la petite base au fond de la gorge 14 est inférieure à la largeur de la bordure 10,
- la hauteur est inférieure ou égale à la hauteur de la bordure 10.

Après l'application de la matrice à chaud 20, la section des bordures 10, 11 prend une forme trapézoïdale débordant sur la piste conductrice 5. La partie débordante 21 bloque la piste conductrice 5 au fond de l'empreinte 6.

Dans l'exemple représenté sur la figure 1 la couronne 3 présente à sa périphérie une bordure sous la forme d'une saillie 13 s'élevant au-dessus de la surface 8,9 de la face frontale 2. Le bord 17 de cette saillie est, avant introduction de la piste conductrice 5, sensiblement perpendiculaire à la surface supérieure 8 de la face frontale 2.

Lorsque la piste conductrice 5 est positionnée dans l'empreinte 6, la saillie 13 est déformée tel que par sertissage pour venir recouvrir le bord interne 19 de ladite piste conductrice comme mieux visible sur la figure 3.

Ainsi, la piste conductrice 5 est maintenue, à sa périphérie externe, par les bordures 10 et 11 et à sa périphérie interne, par la saillie 13 entourant la couronne 3.

Bien entendu, la saillie 13 peut s'étendre circonférentiellement, soit en partie, soit en totalité, autour de la couronne 3.

L'invention est décrite dans ce qui précède à titre non limitatif. Il est bien entendu que l'Homme de Métier sera à même de réaliser diverses variantes sans pour autant sortir du cadre de l'invention. En particulier, le nombre, la forme et la position des bordures peut faire l'objet de nombreuses variantes.

## Revendications

1. Procédé de fabrication d'une roue dentée, notamment pour dispositif de commande d'essuie-glace, du type présentant sur l'un des ses faces frontales (2) une piste conductrice (5), consistant à prévoir dans la surface frontale une empreinte (6) d'une forme complémentaire à la forme de la piste conductrice, à fixer la piste conductrice (5) dans ladite empreinte (6) et à solidariser la piste conductrice (5) avec la face frontale (1) de la roue dentée, procédé dans lequel on prévoit en outre sur la face frontale une bordure (10, 11) longeant le bord périphérique de l'empreinte (6) et faisant saillie en bordure (10, 11) de ladite empreinte (6) en venant de la face frontale (2), et dans lequel on déforme ladite bordure (10, 11) saillante, lorsque la piste conductrice (5) est disposée dans l'empreinte (6), en exerçant sur ladite bordure (10, 11) périphérique en saillie une contrainte sensiblement radiale dirigée vers la piste conductrice (5) jusqu'à ce qu'elle recouvre le bord de ladite piste conductrice (5), caractérisé en ce que la face frontale (2) de la roue dentée est constituée par un matériau thermoplastique, et en ce que l'on procède à la déformation de la bordure (10, 11) périphérique à l'aide d'une matrice à chaud (20) exerçant une pression sur la bordure (10, 11) périphérique.

2. Procédé de fabrication d'une roue dentée selon la revendication 1, caractérisé en ce que le poinçon à chaud présente une gorge (14) dont la largeur correspond sensiblement à la largeur de la bordure (10, 11) périphérique, les bords latéraux de la gorge (14) étant inclinés vers la direction de la piste conductrice (5).

3. Procédé selon l'une quelconque des revendications précédentes, caractérisé en ce que la bordure (10, 11) est située au voisinage de la périphérie extérieure de la piste conductrice (5).

4. Procédé selon l'une quelconque des revendications précédentes, caractérisé en ce que la bordure (13) est située au voisinage de la périphérie interne (19) de la piste conductrice (5).

5. Procédé selon l'une quelconque des revendications précédentes, caractérisé en ce que le désaffleurement de piste conductrice (5) par rapport à la surface de la roue est comprise entre 0,20 millimètres et -0,05 millimètres.

6. Procédé selon l'une quelconque des revendications 1 à 5, caractérisé en ce que la face frontale (1) présente une couronne axiale (3) formant saillie, la piste conductrice (5) présentant une découpe de section complémentaire dans laquelle est formée la périphérique interne (19).

7. Procédé selon la revendication 6, caractérisé en ce que la couronne axiale présente un ergot (4) de positionnement faisant saillie, la piste conductrice (5) présentant une découpe complémentaire.

## Claims

1. A method of making a toothed wheel, especially for a screen wiper control apparatus, of the type having a conductive track (5) on one of its front faces (2), consisting in providing in the front face a recess (6), the form of which is complementary to the form of the conductive track, fixing the conductive track (5) in the said recess (6), and securing together the conductive track (5) and the front face (2) of the toothed wheel, the method further including forming on the front face an edge element (10, 11) extending along the peripheral edge of the recess (6) and projecting as a border (10, 11) of the said recess (6) by stemming from the front face (2), and wherein the said projecting edge element (10, 11) is deformed, when the conductive strip (5) is disposed in the recess (6), by exerting on the said projecting peripheral edge element (10, 11) a substantially radial stress directed towards the conductive track (5) until it overlies the edge of the said conductive track (5), characterised in that the front face (2) of the toothed wheel is formed of a thermoplastic material, and in that the peripheral edge element (10, 11) is deformed with the aid of a hot matrix (20) exerting a pressure on the peripheral edge element (10, 11).

2. A method of making a toothed wheel according to Claim 1, characterised in that the hot punch has a groove (14), the width of which corresponds substantially to the width of the peripheral edge element (10, 11), the side edges of the groove (14) being inclined towards the direction of the conductive track (5).

3. A method according to any one of the preceding Claims, characterised in that the edge element (10, 11) is situated in the vicinity of the outer periphery of the conductive track (5).

4. A method according to any one of the preceding Claims, characterised in that the edge element (13) is situated in the vicinity of the inner periphery of the conductive track (5).

5. A method according to any one of the preceding Claims, characterised in that the conductive track (5) stands proud of the surface of the wheel by an amount between 0.20 millimetre and -0.05 millimetre.

6. A method according to any one of Claims 1 to 5, characterised in that the front face (1) has an axial crown portion (3) constituting a projection, the conductive track (5) having a cut-out of complementary cross section in which the inner periphery (19) is formed.

7. A method according to Claim 6, characterised in that the axial crown portion comprises a projecting positioning boss, the conductive track (5) having a complementary cut-out.

## Patentansprüche

1. Verfahren zur Herstellung eines Zahnrads, insbesondere für eine Scheibenwischersteuervorrichtung, das auf einer seiner Stirnseiten (2) eine Leiterbahn (5) aufweist, darin bestehend, daß in der stirnseitigen Fläche eine Eintiefung (6) mit einer Form, passend zur Form der Leiterbahn, vorgesehen wird, daß die Leiterbahn (5) in der besagten Eintiefung (6) befestigt wird und daß die Leiterbahn (5) fest mit der Stirnseite (1) des Zahnrads verbunden wird, wobei außerdem auf der Stirnseite eine Umrandung (10, 11) längs des Umfangsrands der Eintiefung (6) vorgesehen ist, die als Umrandung (10, 11) der besagten Eintiefung (6) vorsteht und von der Stirnseite (2) ausgeht und wobei die besagte vorstehende Umrandung (10, 11) verformt wird, wenn die Leiterbahn (5) in der Eintiefung (6) angeordnet ist, indem auf die besagte vorstehende Umfangsumrandung (10, 11) eine zur Leiterbahn (5) gerichtete, in etwa radiale Beanspruchung ausgeübt wird, bis sie den Rand der besagten Leiterbahn (5) bedeckt, **dadurch gekennzeichnet**, daß die Stirnseite (2) des Zahnrads aus einem Thermoplastwerkstoff besteht und daß die Verformung der Umfangsumrandung (10, 11) mit Hilfe einer Warmmatrize (20) erfolgt, die einen Druck auf die Umfangsumrandung (10, 11) ausübt.

2. Verfahren zur Herstellung eines Zahnrads nach Anspruch 1, **dadurch gekennzeichnet**, daß der Warmstempel eine Auskehlung (14) aufweist, deren Breite in etwa der Breite der Umfangsumrandung (10, 11) entspricht, wobei die Seitenränder der Auskehlung (14) in Richtung der Leiterbahn (5) geneigt sind.

3. Verfahren nach einem der vorangehenden Ansprüche, **dadurch gekennzeichnet**, daß sich die Umrandung (10, 11) in der Nähe des äußeren Umfangs der Leiterbahn (5) befindet.

4. Verfahren nach einem der vorangehenden Ansprüche, **dadurch gekennzeichnet**, daß sich die Umrandung (13) in der Nähe des inneren Umfangs (19) der Leiterbahn (5) befindet.

5. Verfahren nach einem der vorangehenden Ansprüche, **dadurch gekennzeichnet**, daß der auf die Oberfläche des Zahnrads bezogene Versatz der Leiterbahn (5) zwischen 0,20 Millimeter und -0,05 Millimeter liegt.

6. Verfahren nach einem der Ansprüche 1 bis 5, **dadurch gekennzeichnet**, daß die Stirnseite (1) einen vorstehenden axialen Kranz (3) aufweist, während die Leiterbahn (5) einen Einschnitt mit entsprechendem Querschnitt aufweist, in dem der innere Umfang (19) ausgebildet ist.

7. Verfahren nach Anspruch 6, **dadurch gekennzeichnet,** daß der axiale Kranz eine vorstehende Positionierungsnase (4) aufweist, während die Leiterbahn (5) einen entsprechenden Einschnitt aufweist.
